# EUROPEAN PATENT APPLICATION

(11) **EP 4 632 479 A1**
(43) Date of publication of application: **15.10.2025**
(21) Application number: 25168488.2
(22) Date of filing: 04.04.2025
(51) Int. Cl.: G03B 11/04, G03B 29/00, G03B 30/00, F24C 15/04

(54) **DOOR FOR COOKING OVEN AND COOKING OVEN**

(30) Priority: 09.04.2024 IT 202400007873
(71) Applicant: Candy S.p.A., 20861 Brugherio, Monza e Brianza (IT)
(72) Inventor: DOYLE, John Piero, I-20861 BRUGHERIO, MONZA E BRIANZA (IT); SCHREIBER, Daniel Bruno Joseef, I-20861 BRUGHERIO, MONZA E BRIANZA (IT); STRINATI, Alberto, I-20861 BRUGHERIO, MONZA E BRIANZA (IT)
(74) Representative: Leihkauf, Steffen Falk

(57) **Abstract**

A door (5) for the cooking oven (1) comprises movable connection portions (15) for the connection of the door (5) to a housing (2) of the cooking oven (1), an outer panel (7) on an outer side (16) of the door (5) and forming a transparent outer viewing region (7.1), an inner panel (8) on an inner side (17) of the door (5) and forming a transparent inner viewing region (8.1), a digital video camera (6) mounted to the door (5) in a video camera space (10) between the outer panel (7) and the inner panel (8) and having a field of view (13) extending through the inner viewing region (8.1) in the direction of the inner side (17), an opaque antilight barrier (12) arranged in the video camera space (10) between an objective (14) of the video camera (6) and the outer panel (7) and sized so as to screen ambient light locally at an inner intersection region (8.2) between the field of view (13) of the video camera (6) and the inner panel (8).

## Description

The present invention relates to a cooking oven, in particular a household electric cooking oven, with a system for detecting features of the dish placed in the cooking cavity of the oven by a video camera, and a door with a built-in video camera for a cooking oven.

Household cooking ovens usually comprise a housing with a cooking cavity, that delimits an area therein for accommodating the dish to be cooked. The cooking cavity has an access opening which can be closed by a door connected to the housing. To allow the viewing of the cooking cavity from outside the oven, the door usually has a transparent viewing area (glass panels of the oven door) and/or an electronic display connected to a video camera mounted in the door itself and directed (at least with the door closed) towards the inside of the cooking cavity.

The use of a video camera is known (placed, for example, inside the cooking cavity or outside the cooking cavity) to generate digital images of the dish in the cooking cavity, and analyze the generated digital images to identify the type of dish, the position of the dish, the features of the containers in which the dish is placed, and/or detect a cooking progress state.

In completely opaque oven doors and with purely indirect viewing, by means of an electronic display, the image acquired by the video camera is influenced by light sources inside the cooking chamber, by reflection, absorption and diffusion of the light on the surfaces of the food, of the cooking chamber and the objects placed in the cooking chamber, as well as the reflection, refraction, absorption and diffusion of light at the interfaces between air and glass when the light crosses the glass panels of the door before reaching the lens of the video camera objective. The reflection and refraction of the light coming from inside the cooking chamber, at the glass panels of the door close to the field of view of the video camera can disturb the digital image acquired and jeopardize the subsequent processing and evaluation of the data obtained.

In transparent oven doors with direct viewing of the cooking chamber from outside the oven, the image acquired by the video camera is also influenced by the ambient light striking the cooking cavity through the glass panels of the oven door. In this case, the reflection of the light coming from the outside of the oven, at the glass panels of the door close to the field of view of the video camera can disturb the digital image acquired and jeopardize the subsequent processing and evaluation of the data obtained.

It is thus the object of the present invention to improve the door of the cooking oven and the cooking oven with a video camera in order to reduce or eliminate the negative effects of reflection and refraction of ambient light and/or light coming from inside the cooking chamber, close to the field of view of the video camera mounted in the oven door.

The object is achieved by a door for a cooking oven according to claim 1. The dependent claims relate to preferred and advantageous embodiments.

### Brief description of the figures

In order to better understand the invention and appreciate the advantages thereof, some exemplary and non-limiting embodiments will be described below with reference to the figures, in which:

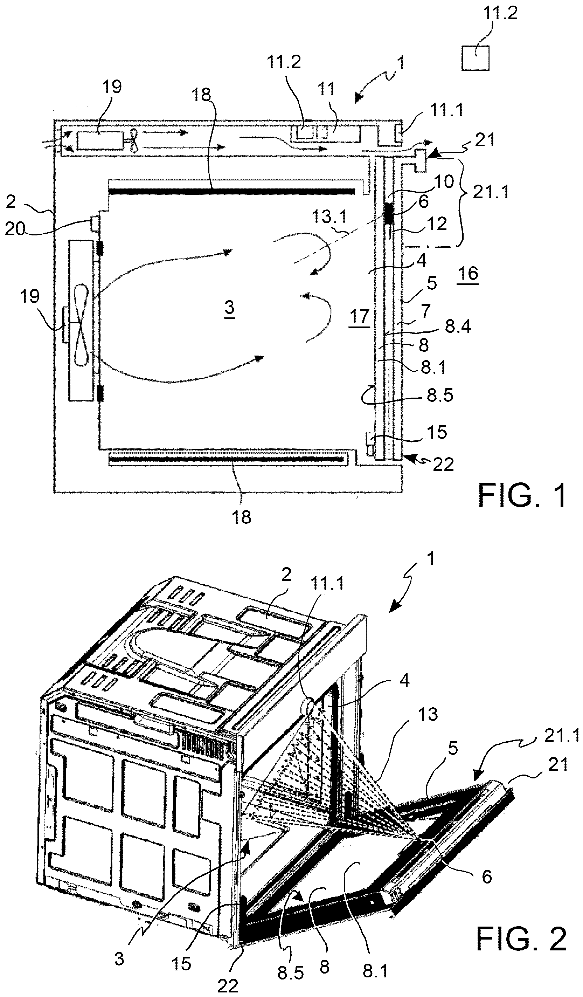

Figure 1 is a diagrammatic side section view of a cooking oven according to an embodiment,
Figure 2 is a perspective view of a cooking oven according to an embodiment,

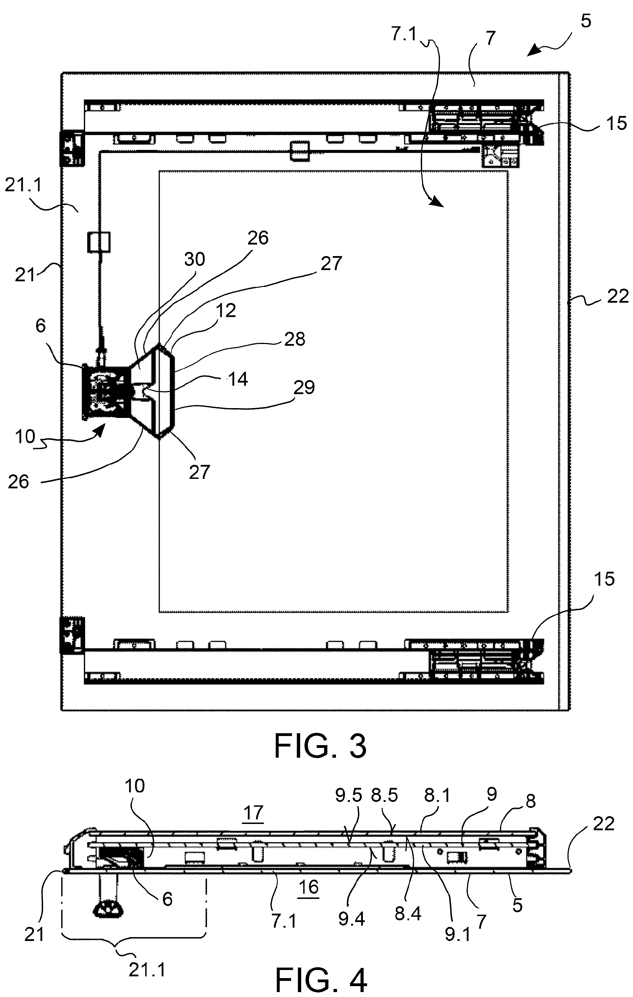

Figure 3 is a front view of a video camera space inside a door for the cooking oven, according to an embodiment,
Figure 4 is a section view of a door for an oven according to an embodiment,

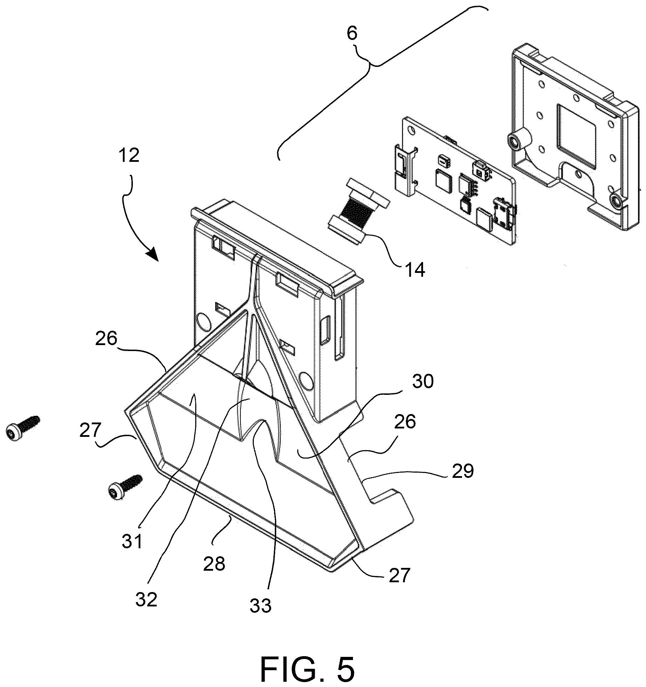

Figure 5 is an exploded perspective view of a video camera and an anti-light barrier,

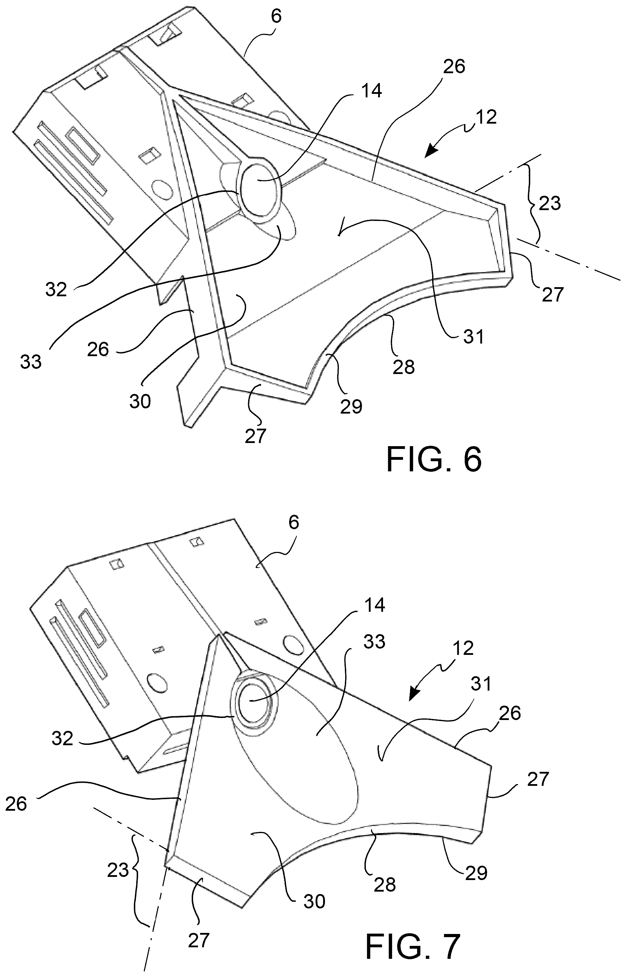

Figure 6 is a perspective view of an anti-light barrier formed by a single piece together with a video camera housing,
Figure 7 is a perspective view of an anti-light barrier formed separately and coupled to a video camera housing,

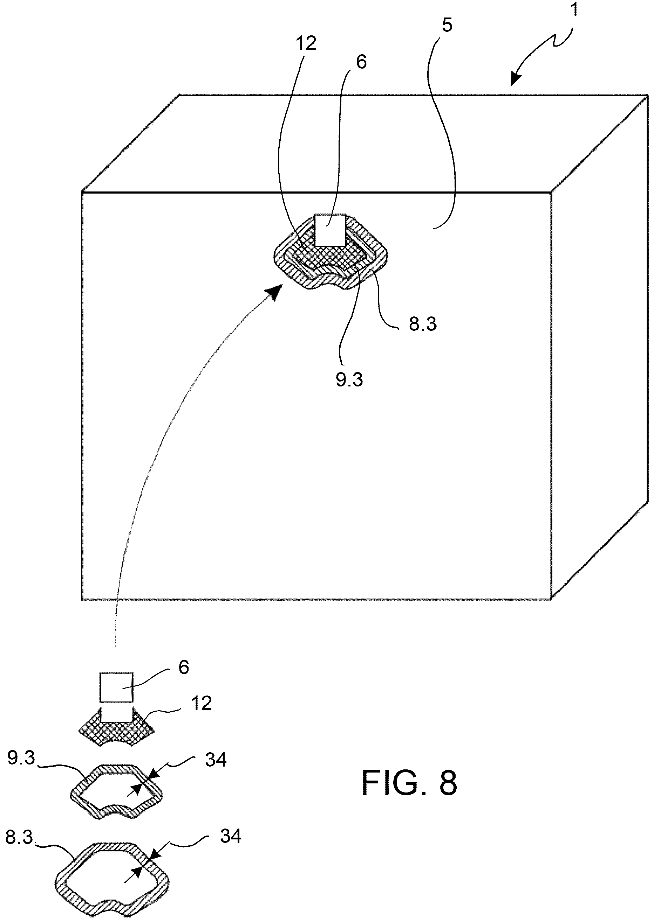

Figure 8 is a diagrammatic front view of an oven body with a front door, a video camera housing (6), a delimitation of an anti-light barrier (12) associated with the video camera (6), a delimitation of an intermediate anti-reflection region (9.3) of an intermediate panel (9) of the door, and a delimitation of an internal anti-reflection region (8.3) of an inner panel (8) of the door, extending around corresponding intersection regions of a field of view (13) of the video camera (6) with intermediate (9) and inner (8) panels, according to an embodiment,

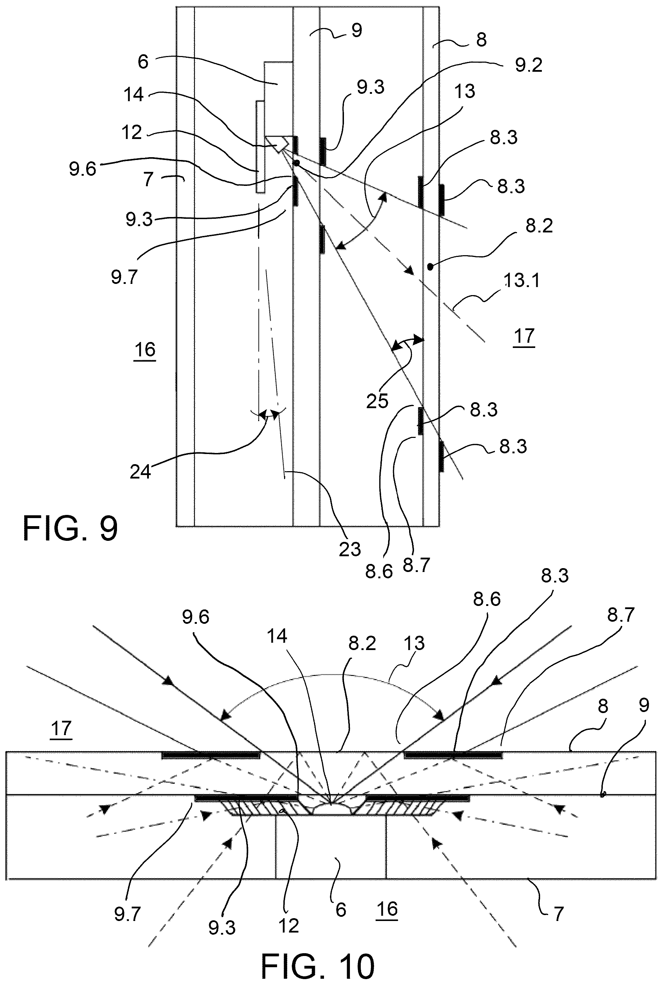

Figure 9 is a diagrammatic section view, according to a vertical section plane, of an oven body with a front door with a video camera housing (6), an anti-light barrier (12) associated with the video camera (6), an intermediate anti-reflection region (9.3) of an intermediate panel (9) of the door, and an internal anti-reflection region (8.3) of an inner panel (8) of the door, extending around corresponding intersection regions of a field of view (13) of the video camera (6) with intermediate (9) and inner (8) panels, according to an embodiment,
Figure 10 is a diagrammatic section view, according to a horizontal section plane, of a door of the oven with a video camera housing (6), an anti-light barrier (12) associated with the video camera (6), an intermediate anti-reflection region (9.3) of an intermediate panel (9) of the door, and an internal anti-reflection region (8.3) of an inner panel (8) of the door, extending around corresponding intersection regions of a field of view (13) of the video camera (6) with intermediate (9) and inner (8) panels, according to an embodiment,

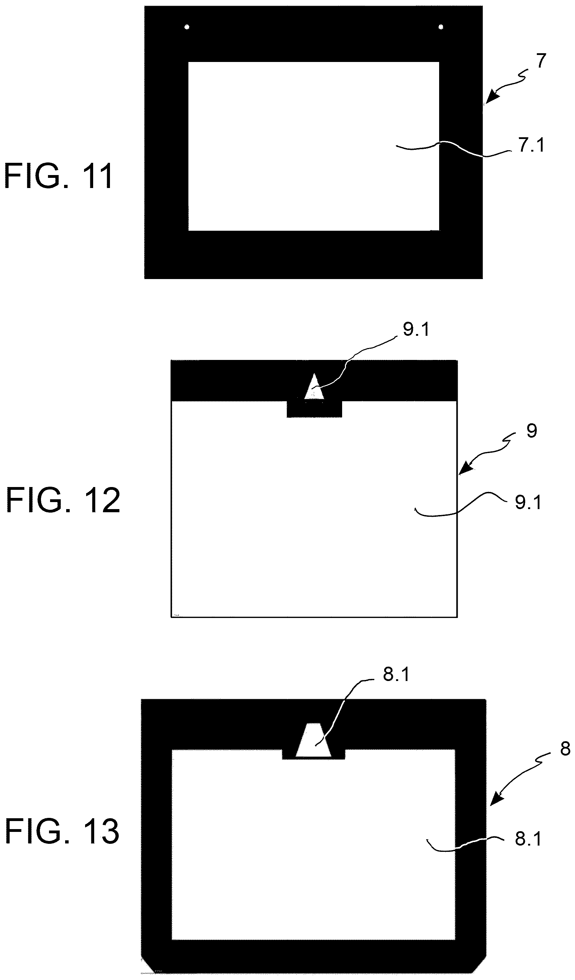

Figures 11, 12, 13 are front views of an outer panel (Fig. 11), an intermediate panel (Fig. 12) and an inner panel (Fig. 13) of an oven door according to an embodiment, showing region delimitations (e.g., in black in the figures) able to absorb the light which is incident on them and thus adapted to act as anti-reflection regions, leaving transparent region delimitations (7.1), (9.1) and (8.1), respectively (in white in the figures), able to transmit the light incident on them.

### Description of embodiments

With reference to the figures, a cooking oven (1), in particular a household electric oven, comprises:
a housing (2) forming a cooking cavity (3) with an access opening (4),
a door (5) connected to the housing (2) and movable between an open position (in which it allows access to the cooking cavity 3) and a closed position (in which it prevents access to the cooking cavity 3), the door (5) having:
   - an outer panel (7) forming a transparent outer viewing region (7.1),
   - an inner panel (8) forming a transparent inner viewing region (8.1),
   - optionally, at least one intermediate panel (9) placed between the outer panel (7) and the inner panel (8) and having a transparent intermediate viewing region (9.1),
a digital video camera (6) mounted to the door (5) in a video camera space (10) between the outer panel (7) and the inner panel (8), possibly between the outer panel (7) and the intermediate panel (9) (said video camera having a direct line of view along the direction of its optical axis (13.1) and looking towards the inside of the cavity, at least with the door closed), and having a field of view (13) extending through the inner viewing region (8.1), optionally through the intermediate viewing region (9.1), into the cooking cavity (3) when the door (5) is in the closed position.

The oven (1) can further comprise an electronic control system (11) in signal connection with the video camera (6) and configured to:
- operate the video camera (6) to acquire digital images of the cooking chamber (3),
- transmit the digital images acquired to a processing module (11.2), e.g., for determining the features of a dish placed in the cooking chamber (3).

According to an aspect of the invention, the oven (1) comprises:
**A)** an opaque anti-light barrier (12) arranged in the video camera space (10) between an objective (14) of the video camera (6) and the outer panel (7) and sized so as to screen ambient light locally at an inner intersection region (8.2) between the field of view (13) of the video camera (6) and the inner panel (8), and/or
**B)** a roughened inner anti-reflection region (8.3), preferably screen-printed, formed on a surface of the inner panel (8) and extending all around the inner intersection region (8.2), in order to reduce ambient light reflections from the surface of the inner panel (8) in the field of view (13) of the video camera (6), and
**C)** optionally, a roughened intermediate anti-reflection region (9.3), preferably screen-printed, formed on a surface of the intermediate panel (9) and extending all around an intermediate intersection region (9.2) between the field of view (13) of the video camera (6) and the intermediate panel (9), in order to reduce reflections of ambient light from the surface of the intermediate panel (9) into the field of view (13) of the video camera (6).

The opaque anti-light barrier (12) prevents or reduces reflections of ambient light in the field of view (13) of the video camera (6) at the inner intersection region (8.2) and, if an intermediate panel (9) is provided, also at the intermediate intersection region (9.2), given that the field of view (13) of the video camera (6) widens from the objective (14) of the video camera (6) towards the inside of the cooking chamber (3).

The anti-reflection region(s) (8.3), (9.3) prevent or reduce reflections of ambient light in the field of view (13) of the video camera (6) originating from the (outer and/or inner) surfaces of the inner panel (8) and/or the intermediate panel (9) immediately close and extending around the field of view (13) of the video camera (6) widening from the objective (14) of the video camera (6) towards the inside of the cooking chamber (3).

According to a further aspect of the invention, the only door (5) for the cooking oven
(1) comprises:
   - movable connection portions (15), e.g., hinges, for the connection of the door (5) with a housing (2) of the cooking oven (1),
   - an outer panel (7) on an outer side (16) of the door (5) and forming a transparent outer viewing region (7.1),
   - an inner panel (8) on an inner side (17) of the door (5) and forming a transparent inner viewing region (8.1),
   - optionally, at least one intermediate panel (9) placed between the outer panel (7) and the inner panel (8) and having a transparent intermediate viewing region (9.1),
   - a digital video camera (6) mounted to the door (5) in a video camera space (10) between the outer panel (7) and the inner panel (8), possibly between the outer panel (7) and the intermediate panel (9), and having a field of view (13) extending through the inner viewing region (8.1), optionally through the intermediate viewing region (9.1), in the direction of the inner side (17),

**A)** an opaque anti-light barrier (12) arranged in the video camera space (10) between an objective (14) of the video camera (6) and the outer panel (7) and sized so as to screen ambient light locally at an inner intersection region (8.2) between the field of view (13) of the video camera (6) and the inner panel (8), and/or
**B)** a roughened inner anti-reflection region (8.3), preferably screen-printed, formed on a surface of the inner panel (8) and extending all around the inner intersection region (8.2), in order to reduce ambient light reflections from the surface of the inner panel (8) in the field of view (13) of the video camera (6), and
**C)** optionally, a roughened intermediate anti-reflection region (9.3), preferably screen-printed, formed on a surface of the intermediate panel (9) and extending all around an intermediate intersection region (9.2) between the field of view (13) of the video camera (6) and the intermediate panel (9), in order to reduce reflections of ambient light from the surface of the intermediate panel (9) into the field of view (13) of the video camera (6).

In the present description and claims the term "inner/outer/intermediate viewing region" indicates a panel region which is transparent to visible light, but consisting of panel material, and thus not openable or closable and not creating any passage opening.

The oven (1) further comprises a heating system (18), e.g., one or more electric resistors arranged outside and/or inside the cooking cavity (3) and/or a microwave generator.

A ventilation system (19) with one or more recirculation and/or suction and/or cooling impellers, operable by electric motors, provides for remixing the air inside the cooking cavity (3), sucking and discharging cooking fumes, and/or cooling oven components, such as the door 5 and the video camera space 10, for example.

The control system 11 is connected and configured to command the heating system 18 and the ventilation system 19 and comprises a user interface 11.1, e.g., with an electronic display, for the selection of operating parameters by the user and for signaling the operating conditions of the oven 1.

In order to ensure adequate lighting for acquiring the digital images, the oven 1 can comprise one or more light sources 20, e.g., strips or lighting units, such as LEDs, which light up the inside of the cooking cavity 3, e.g., at least when the video camera 6 acquires digital images.

The light source(s) 20 are advantageously positioned in a gap between the outer panel 7 and the inner panel 8, e.g., in the same video camera space 1, preferably between the outer panel 7 and the intermediate panel 9, so as to be protected (exactly like the video camera 6) from heat and from splashes and deposits of cooking substances coming from the cooking cavity 3. Alternatively or additionally, the light source(s) 20 are positioned at a wall of the cooking cavity.

According to an embodiment, the video camera 6 is positioned on a free side 21 or in a free end portion 21.1 (e.g., in the half or third) of the door 5 opposite a constraint side 22 of the door 5 with respect to the housing 2.

This is particularly advantages for acquiring digital images from a perspective that allows possible dishes inside the cooking cavity 3 to be observed completely.

### Description of the anti-light barrier 12

According to an embodiment, the anti-light barrier 12 is a component made of polymeric material with high thermal resistance, e.g., polyamide PA6, or polyamide PA66, simple or containing glass fiber, possibly with a surface finish having high absorption in the visible light spectrum (e.g., optical black color).

The anti-light barrier 12, when applied to the video camera 6, has a surface extension converging in the same convergence direction as the (conical) field of view 13 of the video camera 6.

The anti-light barrier 12 forms a barrier plane 23 inclined at an acute angle with respect to an optical axis 13.1 of the video camera 6.

The (conical) field of view 13 and the optical axis 13.1 of the video camera 6 extend from the objective 14 in an inclined manner with respect to a plane of the outer panel 7 towards the inner side 17 and towards a constraint side 22 of the door 5, and the anti-light barrier 12 extends from a video camera housing 6 towards the constraint side 22 of the door 5 and defines a barrier inclination angle 24 with respect to the plane of the outer panel 7 less than an optical inclination angle 25 of the optical axis 13.1 with respect to the plane of the outer panel 7.

According to an embodiment, the anti-light barrier 12 forms a base plate 30 delimited by two side edges 26, preferably straight, converging towards the video camera 6, possibly two opposite beveled or truncated corners 27, and by a larger base edge 28 further from the objective 14 and extending between the two opposite corners 27, advantageously in an arc (even more advantageously an arc of a circle with the arc vertex facing the objective 5.

This geometry and orientation of the anti-light barrier 12 reconciles the needs to screen annoying light reflections and to maximize the entry of light into the oven for the purpose of good lighting.

According to an embodiment, the anti-light barrier 12 forms a peripheral edge 29 bent at an angle with respect to the base plate 30 towards the inner side 17 and oriented transversely (e.g., at an angle comprised between 70° and 110°) with respect to the base plate 30 and with respect to the plane of the outer panel 7.

According to an embodiment, the anti-light barrier 12 forms an objective seat 32 e.g., a through-hole or a cavity in which the objective 14 extends and which opens into an inner barrier surface 31 of the anti-light barrier 12 facing the inner side 17, wherein the inner barrier surface 31 forms a funnel-shaped cavity 33, e.g. frustoconical, which widens moving away from the objective 32.

The anti-light barrier 12 can be formed as a single piece with the video camera housing 6 or an accessory coupled mechanically or glued to the video camera 6 or to the door 5.

### Description of the inner 8.3 and intermediate 9.3 anti-reflection regions

According to an embodiment, the inner anti-reflection region 8.3 is formed in an outer surface 8.4 of the inner panel 8 facing towards the outer side 16 (towards the outside of the oven 1), in order to reduce annoying reflections originating in the interface between the outer surface 8.4 and the air.

Alternatively or (preferably) additionally, the inner anti-reflection region 8.3 is formed (also or only) in an inner surface 8.5 of the inner panel 8 facing towards the inner side 17 (towards the cooking chamber 3), in order to reduce annoying reflections originating in the interface between the inner surface 8.5 and the air.

The inner anti-reflection region 8.3 is roughened by screen printing, surface coating or equivalent processes and means known to a person skilled in the art.

The inner anti-reflection region 8.3 advantageously has an inner peripheral delimitation 8.6 and an outer peripheral delimitation 8.7 having the shape of a projection of an outer contour of the anti-light barrier 12 along the optical axis 13.1 on a plane parallel to the inner panel 8. This form is the result of the section with the plane of the inner panel (8) of the cone defining the effective field of view deployed from the video camera objective, and which has an "irregular" or "distorted" shape to the extent that it follows the "barrel" or "pin-cushion" distortion imposed by the optical aberrations inherent in the optical system (between the lens and the image plane of the optical sensor) of the video camera on its effective field of view.

This reconciles the needs to reduce unwanted reflections and make it easier for the user to see the inside of the oven through door 5.

According to an embodiment, the intermediate anti-reflection region 9.3 is formed in an outer surface 9.4 of the intermediate panel 9 facing towards the outer side 16 (towards the outside of the oven 1), in order to reduce annoying reflections originating in the interface between the outer surface 9.4 and the air.

Alternatively or (preferably) additionally, the intermediate anti-reflection region 9.3 is formed (also or only) in an inner surface 9.5 of the intermediate panel 9 facing towards the inner side 17 (towards the cooking chamber 3), in order to reduce annoying reflections originating in the interface between the inner surface 9.5 and the air.

The intermediate anti-reflection region 9.3 is roughened by screen printing, surface coating or equivalent processes and means known to a person skilled in the art.

The intermediate anti-reflection region 9.3 advantageously has an inner peripheral delimitation 9.6 and an outer peripheral delimitation 9.7 having the shape of a projection of an outer contour of the anti-light barrier 12 along the optical axis 13.1 on a plane parallel to the intermediate panel 9. This form is the result of the section with the plane of the intermediate panel (9) of the cone defining the effective field of view as deployed from the video camera objective, and which has an "irregular" or "distorted" shape to the extent that it follows the "barrel" or "pin-cushion" distortion imposed by the optical aberrations inherent in the optical system (between the lens and the image plane of the optical sensor) of the video camera on its effective field of view.

The intermediate anti-reflection region 9.3 is smaller in size than the inner anti-reflection region 8.3. In fact, the intermediate anti-reflection region (9.3)---which is described by the intersection of the cone that defines the field of view from the video camera objective with the intermediate panel (9)--- is placed at a shorter distance from the video camera than the distance between the video camera and the internal anti-reflection region (8.3)---which is instead described by the intersection of the cone that defines the field of view from the video camera objective with the internal panel (8).

This reconciles the needs to reduce unwanted reflections and make it easier for the user to see the inside of the oven through door 5.

Preferably, the inner anti-reflection region 8.3 and/or the intermediate anti-reflection region 9.3 has a width 34 transverse to a peripheral extension thereof and measured in a plane parallel to the inner panel 8, less than the (maximum) dimension of an orthogonal projection of the anti-light barrier 12 onto the inner panel 8, and preferably less than half or less than a third or less than a quarter or less than a fifth of the (maximum) dimension of an orthogonal projection of the anti-light barrier 12 onto the inner panel 8.

As the annoying reflections are effectively only originated in the vicinity of the margins of the field of view 13 and not in significantly distant regions, keeping the anti-reflection regions relatively narrow maximizes the undisturbed visibility of the inside of the oven through the door panels.

### Reference numerals

cooking oven 1
housing 2
cooking cavity 3
access opening 4
door 5
video camera 6
outer panel 7
outer viewing region 7.1
inner panel 8
transparent inner viewing region 8.1
inner intersection region 8.2
inner anti-reflection region 8.3
outer surface 8.4 of the inner panel
inner surface 8.5 of the inner panel
inner peripheral delimitation 8.6 of the inner anti-reflection region
outer peripheral delimitation 8.7 of the inner anti-reflection region
intermediate panel 9
transparent intermediate viewing region 9.1
intermediate intersection region 9.2
intermediate anti-reflection region 9.3
outer surface 9.4 of the intermediate panel
inner surface 9.5 of the intermediate panel
inner peripheral delimitation 9.6 of the intermediate anti-reflection region
outer peripheral delimitation 9.7 of the intermediate anti-reflection region
video camera space 10
control system 11
user interface 11.1
processing module 11.2
anti-light barrier 12
field of view 13
optical axis 13.1
objective 14
movable connection portions 15
outer side 16
inner side 17
heating system 18
ventilation system 19
light sources 20
free side 21 of the door
free end portion 21.1 of the door
constraint side 22 of the door
barrier plane 23
barrier inclination angle 24
optical inclination angle 25
lateral sides 26
opposite corners 27
larger base edge 28
peripheral edge 29
base plate 30
inner barrier surface 31
objective seat 32
funnel-like cavity 33
width 34

## Claims

1. A door (5) for a cooking oven (1), comprising:
- movable connection portions (15) for the connection of the door (5) with a housing (2) of the cooking oven (1),
- an outer panel (7) on an outer side (16) of the door (5) and forming a transparent outer viewing region (7.1),
- an inner panel (8) on an inner side (17) of the door (5) and forming a transparent inner viewing region (8.1),
- a digital video camera (6) mounted to the door (5) in a video camera space (10) between the outer panel (7) and the inner panel (8) and having a field of view (13) extending through the inner viewing region (8.1) in the direction of the inner side (17),
**A)** an opaque anti-light barrier (12) arranged in the video camera space (10) between an objective (14) of the video camera (6) and the outer panel (7) and sized so as to screen ambient light locally at an inner intersection region (8.2) between the field of view (13) of the video camera (6) and the inner panel (8).

2. A door (5) according to claim 1, comprising:
**B)** a roughened or screen-printed inner anti-reflection region (8.3), formed on a surface of the inner panel (8) and extended all around the inner intersection region (8.2).

3. A door (5) according to claim 1 or 2, comprising:
- an intermediate panel (9) placed between the outer panel (7) and the inner panel (8) and having a transparent intermediate viewing region (9.1),
wherein the video camera (6) is mounted in the video camera space (10) between the outer panel (7) and the intermediate panel (9), and the field of view (13) is also extended through the intermediate viewing region (9.1),
- **C)** a roughened or screen-printed intermediate anti-reflection region (9.3), formed on a surface of the intermediate panel (9) and is extended all around an intermediate intersection region (9.2) between the field of view (13) of the video camera (6) and the intermediate panel (9).

4. A door (5) according to any one of the preceding claims, wherein the anti-light barrier (12) is a component made of a polymeric material with high thermal resistance or polyamide PA6, or polyamide PA66, simple or having glass fiber, and/or
wherein the anti-light barrier (12) has a surface finish with high absorption in the visible light spectrum,
AND/OR wherein the anti-light barrier (12) has a surface extension converging in the same convergence direction as the field of view (13) of the video camera (6),
AND/OR wherein the anti-light barrier (12) forms a barrier plane (23) inclined at an acute angle with respect to an optical axis (13.1) of the video camera (6).

5. A door (5) according to any one of the preceding claims, wherein the field of view (13) and the optical axis (13.1) of the video camera (6) extend from the objective (14) in an inclined manner with respect to a plane of the outer panel (7) towards the inner side (17) and towards a constraint side (22) of the door (5) with respect to the oven (1), and
the anti-light barrier (12) extends from a housing of the video camera (6) towards the constraint side (22) of the door (5) and defines a barrier inclination angle (24) with respect to the plane of the outer panel (7) less than an optical inclination angle (25) of the optical axis (13.1) with respect to the plane of the outer panel (7),
and/or
the anti-light barrier (12) extends from a housing of the video camera (6) towards the constraint side (22) of the door (5):
- in the absence of the intermediate panel (9), over a length such as to extend beyond the inner intersection region (8.2) considered in an orthogonal projection on the door plane,
and,
- in the case of presence of the intermediate panel (9), over a length such as to extend beyond the intermediate intersection region (9.2) considered in an orthogonal projection on the door plane.

6. A door (5) according to any one of the preceding claims, wherein the anti-light barrier (12) forms a base plate (30) delimited by two side edges (26) converging towards the video camera (6), by two opposite beveled or truncated corners (27), and by a larger base edge (28) further from the objective (14) and extended between the two opposite corners (27), in an arc with the arc vertex facing the objective (5).

7. A door (5) according to any one of the preceding claims, wherein the anti-light barrier (12) forms a base plate (30) and a peripheral edge (29) bent at an angle with respect to the base plate (30) towards the inner side (17) and oriented transversely with respect to the base plate (30) and with respect to the plane of the outer panel (7),
AND/OR
wherein the anti-light barrier (12) forms an objective seat (32) in which the objective (14) of the video camera (6) extends and which opens into an inner barrier surface (31) of the anti-light barrier (12) facing the inner side (17),
wherein the inner barrier surface (31) forms a frustoconical, funnel-like cavity (33), which widens moving away from the objective (32) in the direction of an optical axis (13.1) of the video camera (6).

8. A door (5) according to any one of claims from 2 to 7, wherein the inner anti-reflection region (8.3) is formed in an outer surface (8.4) of the inner panel (8) facing the outer side (16),
AND/OR wherein the inner anti-reflection region (8.3) is formed in an inner surface (8.5) of the inner panel (8) facing the inner side (17).

9. A door (5) according to any one of claims from 2 to 8, wherein the inner anti-reflection region (8.3) has an inner peripheral delimitation (8.6) and an outer peripheral delimitation (8.7) having the shape of a projection of at least one outer contour part of the anti-light barrier (12) along the optical axis (13.1) of the video camera (6) on a plane parallel to the inner panel (8).

10. A door (5) according to any one of claims from 3 to 9, wherein the intermediate anti-reflection region (9.3) is formed in an outer surface (9.4) of the intermediate panel (9) facing the outer side (16).

11. A door (5) according to any one of claims from 3 to 10, wherein the intermediate anti-reflection region (9.3) is formed in an inner surface (9.5) of the intermediate panel (9) facing the inner side (17).

12. A door (5) according to any one of claims from 3 to 11, wherein the intermediate anti-reflection region (9.3) has an inner peripheral delimitation (9.6) and an outer peripheral delimitation (9.7) having the shape of a projection of at least one outer contour part of the anti-light barrier (12) along the optical axis (13.1) on a plane parallel to the intermediate panel (9).

13. A door (5) according to any one of claims from 3 to 12, wherein the intermediate anti-reflection region (9.3) is smaller in size than the inner anti-reflection region (8.3).

14. A door (5) according to any one of claims from 2 to 12, wherein the inner anti-reflection region (8.3) and/or the intermediate anti-reflection region (9.3) have a width (34) transverse to a peripheral extension thereof and measured in a plane parallel to the inner panel (8), wherein said transverse width (34) is less than a dimension of an orthogonal projection of the anti-light barrier (12) on the inner panel (8), or
wherein said transverse width (34) is less than half or less than a third or less than a quarter or less than a fifth of the (maximum) dimension of an orthogonal projection of the anti-light barrier (12) on the inner panel (8).

15. A cooking oven (1), in particular a household electric oven, comprising a door (5) according to any one of the preceding claims.
